# EUROPEAN PATENT SPECIFICATION

(11) **EP 1 466 492 B1**
(45) Date of publication and mention of the grant of the patent: **09.11.2011**
(21) Application number: 02711205.1
(22) Date of filing: 16.01.2002
(51) Int. Cl.: H04W 4/02

(54) **SYSTEM FOR IMPROVING THE HANDLING OF DEFERRED REQUESTS OF THE LOCATION OF A USER TERMINAL IN A MOBILE TELEPHONE SYSTEM**
SYSTEM ZUR VERBESSERUNG DER HANDHABUNG VON VERZÖGERTEN ANFRAGEN ZUR LOKALISIERUNG EINES TEILNEHMERENDGERÄTES IN EINEM MOBILTELEFONSYSTEM
SYSTEME PERMETTANT D'AMELIORER LA MANIPULATION DES DEMANDES DIFFEREES DE LOCALISATION DE TERMINAL D'UTILISATEUR DANS UN SYSTEME TELEPHONIQUE MOBILE

(43) Date of publication of application: 13.10.2004
(73) Proprietor: Telefonaktiebolaget L M Ericsson (publ), 164 83 Stockholm (SE)
(72) Inventor: LALA, Alessandro, I-80125 Napoli (IT); DE LUCA, Enrico, I-81100 Caserta (IT); IOVIENO, Maurizio, I-84085 Mercato S. Severino (IT)
(74) Representative: Tonscheidt, Andreas
(86) International application number: PCT/IT2002/000022
(87) International publication number: WO 2003/061322

(56) References cited:
- WO-A-00/25545
- US-A1- 2001 009 544
- "Digital cellular telecommunications system (Phase 2+) (GSM); Universal Mobile Telecommunications System (UMTS); Functional stage 2 description of location services (3GPP TS 23.271 version 4.4.0 Release 4); ETSI TS 123 271 V4.4.0 (2001-12)" ETSI TS 123271 V4.4.0, [Online] December 2001 (2001-12), pages 16-26, 44-46,62, XP002208109 Retrieved from the Internet: <URL:http://WEBAPP.ETSI.ORG/exchangefolder /ts_123271v040400p.pdf> [retrieved on 2002-07-30]
- "Digital cellular telecommunications system (Phase 2+) (GSM); Universal Mobile Telecommunications System (UMTS); Location Services (LCS); Service description, Stage 1 (3GPP TS 22.071 version 4.3.0 Release 4); ETSI TS 122 071 V4.3.0 (2001-03)" ETSI TS 122 071 V4.3.0, [Online] March 2001 (2001-03), pages 19-22, XP002208110 Retrieved from the Internet: <URL:http://WEBAPP.ETSI.ORG/exchangefolder /ts_122071v040300p.pdf> [retrieved on 2002-07-30]

## Description

The present invention relates to a new system for improving the handling of deferred requests of the location of a user terminal in a mobile telephone system negotiating, between an LCS client and an LCS server (LCS = LoCation Services), the time gap relating to said deferred requests.

The invention can be applied to both GSM and UMTS technologies, and in the context of both Circuit Switched (CS) and Packeted Switch (PS).

The technical specification ETSI TS 123271 V4.4.0 "Digital cellular telecommunications system (Phase 2+); Universal Mobile Telecommunications System (UMTS); Location Services (LCS); Functional description;" discloses the location services as defined by ETSI, wherein a LCS client may sent a "Deferred Location Service Request" including the event that shall trigger the sending of a Location Report.

The patent application US-A-2001/0009544 describes a method for locating a subscriber terminal in a PS radio-system, wherein the core network transmits a location request message to the radio network. The subscriber terminal is paged and transmits a paging response message via the radio network to the core network, which locates the terminal on the basis of information included in the paging response message.

The prior art concerning the mobile positioning systems, the way in which deferred requests of the location of a mobile user equipment are currently carried out and the new system and method to improve, according to the invention, the handling of said deferred requests, are illustrated in the attached drawings in which:
fig. 1 is a block diagram representing the standard architecture of a positioning system according to the state of the art;
fig. 2 is a diagram representing how the main signaling between nodes currently takes place in case of a deferred request of the location of a user equipment, in a mobile telephone system;
figs. 3 and 4 illustrate how the abort of the deferred location request currently takes place, due to expiring of the timer of MSC/SGSN: and
fig. 5 illustrates how the abort of the deferred location request takes place, due to expiring of the timer of MSC/SGSN, according to the invention, with negotiated timer value.

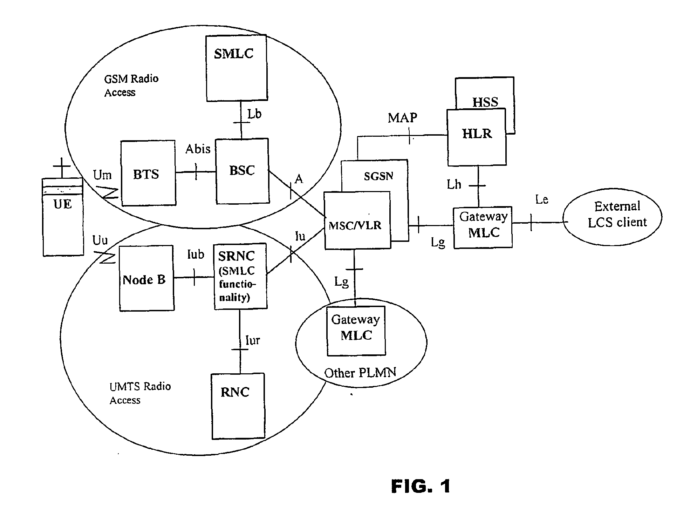

With reference to the attached drawings, Fig. 1 represents the standard architecture of a mobile positioning system.

The Gateway Mobile Location Center (GMLC) implements functionalities required to support the LoCation Services LCS. In one network, there may be more than one GMLC. Each GMLC is the first node for the accesses of an external LCS client in a mobile network. GMLC may request routing information from a global register - Home Location Register (HLR) or Home Subscriber Server (HSS)- of the subscribers of the operator. Furthermore the GMLC contains information allowing to perform authentication and authorization activities of external LCS client entities requiring location of mobile users. After having obtained the routing information and performed the authorization and authentication activities of the external LCS clients, GMLC sends the location request to the Mobile Services Switching Center or to the Visitor Location Register (MSC/VLR) or to the Serving GPRS Support Node (SGSN) and receives information about the geographic coordinates of the mobile user terminal whose location has been requested from the corresponding entities.

The HLR/HSS register contains all subscription user data, including LCS subscription user data and routing information. For a roaming mobile subscriber, HLR/HSS may be in a different network from the one he is currently roaming into. In other words, should the user be roaming in the network of an operator different from the one he subscribes to, the HLR/HSS register is always the one of the operator the user subscribes to. The MSC/VLR or SGSN implements the functional activities for authorizing and handling location requests relating to the subscriber. The LCS functions of MSC/SGSN relate to charging and billing, coordination, location request and operation of LCS services.

The system provides the opportunity of requesting the location of the mobile user terminals from an external LCS client (Mobile Terminating Location Request=MT-LR), the location from the terminal itself (Mobile Originating Location Request=MO-LR) and the auto-induced location from network (Network Induced-Location Request= NI-LR).

An LCS client can perform a deferred request of the location of a user terminal in a mobile system, i.e. he can request to be supplied with the current location coordinates of the mobile user, if immediately available, or the location coordinates of the user itself in a subsequent instant in which an event specified in the request takes place (e.g. when the user becomes available). How long the MSC/SGSN must wait before aborting the location procedure is not standard and depends on the implementation.

As an example, a deferred mobile terminal location request may be used to have subscriber location information when the subscriber becomes available after temporary loss of radio connectivity. Further events could also be defined in the future.

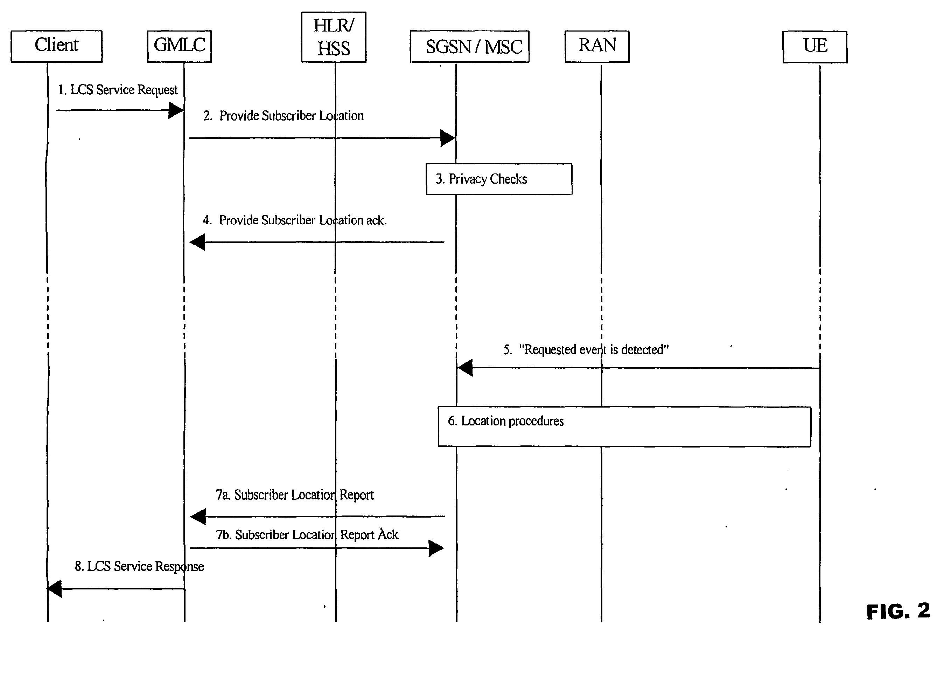

In fig. 2 of the attached drawings an overview is provided of the main signalling between nodes in case of a deferred location request for a user equipment in a mobile telephone system.

The LCS client sends a positioning request to the GMLC by means of LCS Service Request message, carrying, among the other information, the indication about the event which has to occur in order to perform positioning. The GMLC verifies the identify of the LCS client and its subscription to the LCS service. The GMLC derives the address of the SGSN/MSC currently visited by the User Equipment (UE) and sends a MAP PROVIDE_SUBSCRIBER_LOCATION message to the SGSN/MSC. This message transfers the received event to the SGSN/MSC. The SGSN/MSC authenticates the GMLC and performs privacy checks in order to verify if the LCS client is allowed to position the target UE. If Privacy Checks are successfully performed, the SGSN/MSC stores the received information and informs the GMLC that the deferred MT-LR has been accepted and is in process by means of MAP PROVIDE_SUBSCRIBER_LOCATION_ACK message. When the requested event is detected in the SGSN/MSC, the location procedures are performed and the results are sent to the GMLC by means of MAP SUBSCRIBER_LOCATION_REPORT message. The GMLC acknowledges the reception of the information by means of MAP SUBSCRIBER_LOCATION_REPORT_ACK message and sends the results to the LCS client by means of LCS SERVICE_RESPONSE message.

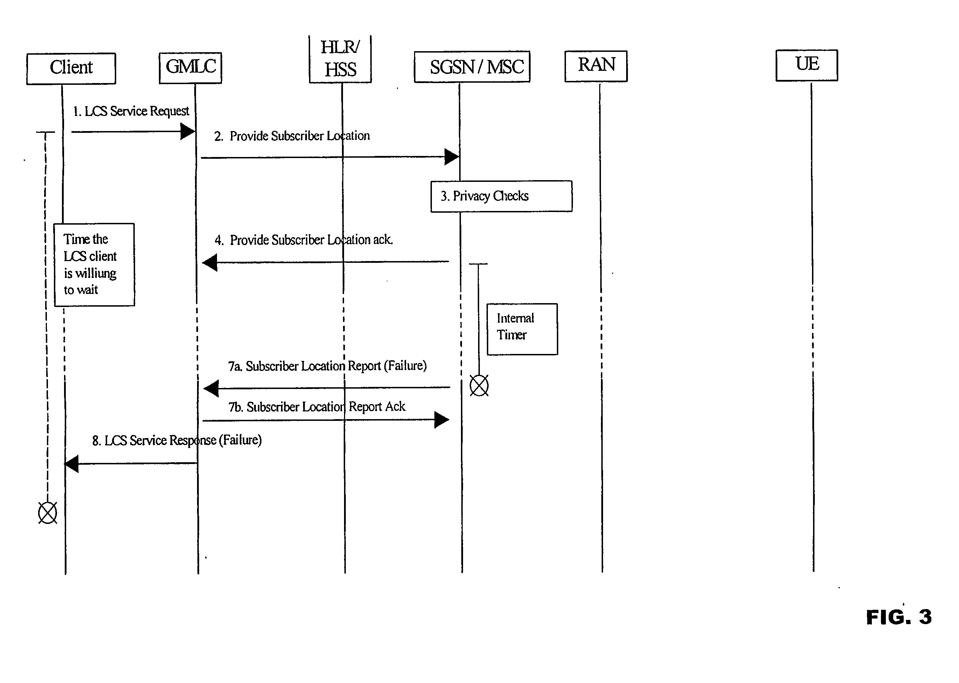

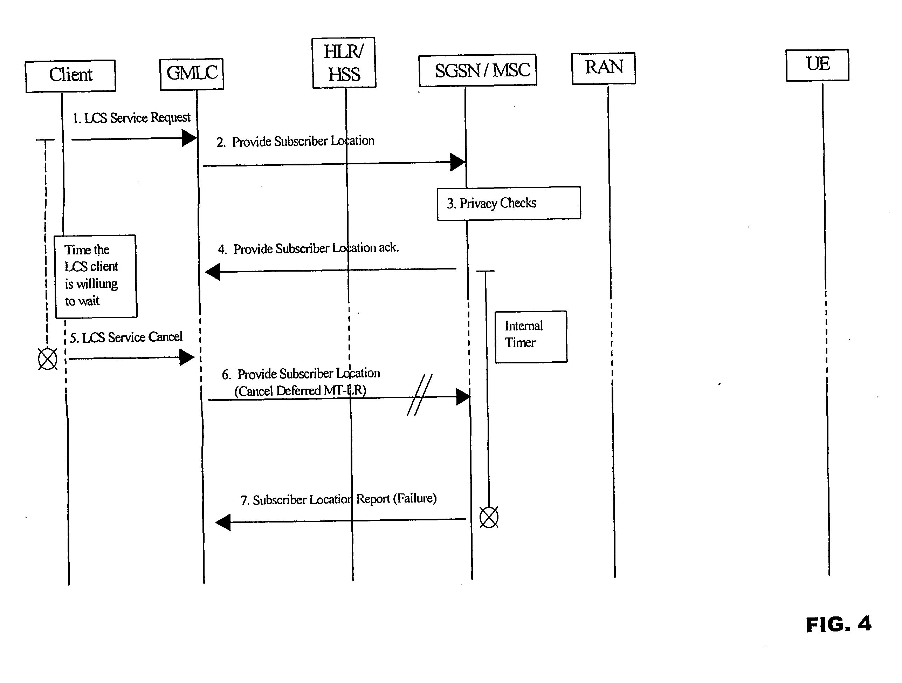

The amount of time that the MSC/SGSN waits before aborting a deferred location procedure in a mobile system is implementation dependent. With the existing technology, in connection with which figs. 3 and 4 illustrate how the aborting of the deferred location request takes place due to expiring of the timer of MSC/SGSN, this center cannot know how long the LCS client is willing to wait for a deferred answer. A too short timer value in MSC/SGSN (fig. 3) will lead therefore to a premature abort of the deferred procedure, even if the LCS client is still willing to wait, with missing profits for the operator. On the other hand, a too long timer value in MSC/SGSN (fig. 4) will lead to a useless engagement of MSC/SGSN resources if the LCS client is no more interested in having the location information and cannot abort the deferred procedure due to any fault in the LCS client or in GMLC or in the links between the LCS client itself and GMLC and/or between GMLC and MSC/SGSN, during the ongoing deferred location request processing.

With the present invention, the above mentioned problems are overcome by providing a mechanism to let MSC/SGSN know the amount of time that the LCS client is willing to wait for the answer to a deferred location request in a mobile system. The invention implies employing a new parameter that the LCS client has to send to MSC/SGSN via GMLC, in order to specify the value for the timer in MSC/SGSN.

The invention is defined in the independent claims 1 and 4 to 6.

More precisely, the invention relates to a system for improving the handling of deferred requests of the location of a user equipment from a Location Service LCS client to a Location Service LCS server in a mobile telephone system, **characterized in that** it comprises:
- a sender for sending, as a new parameter, a time gap within which the LCS client must receive the positioning information, to the Mobile Service Switching Center MSC, through the Gateway Mobile Location Center GMLC;
- a receiver for receiving said new parameter at the Mobile Service Switching Center MSC.

The invention relates also to a method to carry out a system as above **characterized in that** said time gap is sent as a new parameter, specifying the maximum amount of time that the LCS client waits for receiving back the location information and in that said new parameter is sent from the LCS client to MSC/SGSN via GMLC in the LCS request. In this method said new parameter is sent from the LCS client to GMLC and from this to MSC/SGSN modifying signalling messages already in use.

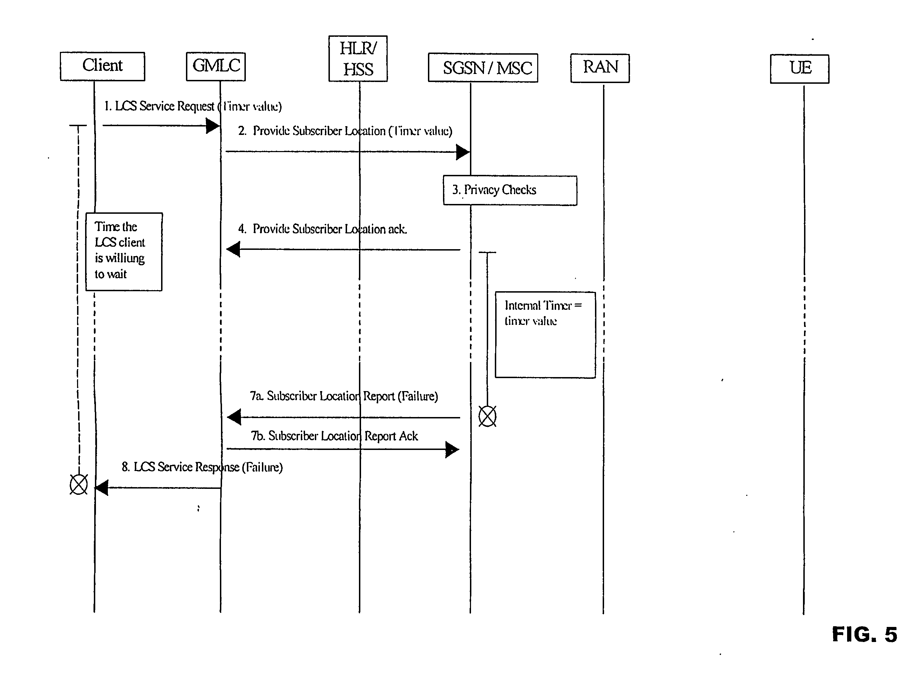

The invention will be now described in detail with particular reference to Fig. 5 of the attached drawings.

According to the invention, a new parameter specifying the amount of time that the LCS client is willing to wait for the location information, which is application dependent, is sent from the LCS client to GMLC in the LCS request. This parameter is sent from GMLC to MSC/SGSN through a MAP (= Mobile Application Part) message "PROVIDE-SUBSCRIBER-LOCATION". When the acknowledgment message "PROVIDE-SUBSCRIBER-LOCATION-ACK" is sent back to GMLC, MSC/SGSN starts a timer according to the value received in the request. If this timer expires, the message "SUBSCRIBER LOCATION REPORT" is sent back, as in the existing procedure.

The main signalling and the way in which, according to the invention, the abort of the deferred location request takes place, due to expiring of the timer of MSC/SGSN - with negotiated timer value - are clearly illustrated in the diagram of fig. 5.

Two examples are useful for the best understanding of the invention.

### Example 1

The LCS client is willing to receive the answer by T=30 minutes. The existing implementation dependent timer in the MSC/SGSN is set to 5 minutes. The UE becomes available 10 minutes after the LCS client positioning request.

### Problems with the existing technology

According to the existing technology, the LCS client sends the request for the deferred location procedure to the MSC/SGSN. After 5 minutes the MSC/SGSN aborts the procedure and sends a failure message to the LCS Client. The positioning procedure is unsuccessful and the operator cannot charge the procedure that means missing gain for the operator.

### Benefit of the invention

According to the improvements given by the invention, the LCS client gives to the MSC/SGSN (via GMLC) the indication that he is willing to receive the answer by 30 minutes. The MSC/SGSN receives the information and starts its internal timer according to the received indication (30 minutes). 10 minutes later, the UE becomes available, the positioning is performed and the response is sent to the LCS client via GMLC. The operator can charge the procedure, as it was successful.

### Example 2

The LCS client is willing to receive the answer by T = 10 minutes. The existing implementation dependent timer in the MSC/SGSN is set to 60 minutes. Five minutes after that the LCS client sends the positioning request, a fault occurs in the GMLC. The UE does not become available.

### Problem with the existing technology

According to the existing technology the positioning request is received in the MSC/SGSN, the needed resources are engaged and the implementation dependent timer is started (60 minutes). Ten minutes later, the LCS client internal timer expires and the LCS client tries to cancel the ongoing deferred location request. Due to a temporary fault in the GMLC, the MSC/SGSN does not receive any indication about the cancellation request, so that the MSC/SGSN resources remain engaged until the MSC/SGSN timer expires. The engagement is not useful for 50 minutes: if the UE becomes reachable after that the LCS client internal timer expires, the LCS client would ignore the positioning response.

### Benefit of the invention

According to the improvements given by the invention, the LCS clients gives to the MSC/SGSN (via GMLC) the indication that he is willing to receive the answer by 10 minutes. The MSC/SGSN receives the information and starts its internal timer according to the received indication (10 minutes). When the timer expires, the MSC/SGSN releases all its involved resources.

The improvement and the advantages attained with the present invention are clearly apparent: the system embodying its subject matter prevents in fact the operator and service providers from missing gains due to early interruption of the deferred location requests and prevents an useless engagement of resources in case of problems in the connections between the LCS client and GMLC and/or between GMLC and MSC/SGSN.

The invention comprises also a computer program loadable on a memory, adapted to perform the steps of the method according to the invention itself.

## Claims

1. Method for initiating a deferred location request, comprising the step of sending a deferred location request message from a location services client through a gateway mobile location center to a mobile services switching center or a serving general packet radio service support node, **characterized by** that the request message comprises a parameter specifying a maximum amount of time the location services client waits for the location information.

2. Method according to claim 1, wherein the new parameter is sent modifying already used signalling messages.

3. Method according to claim 2, wherein a mobile services switching centre or a general packet radio service support node starts on reception of a "PROVIDE-SUBSCRIBER-LOCATION-ACK" acknowledgment message, a timer according to the time value in the request, a message "SUBSCRIBER LOCATION REPORT" being sent to gateway mobile location center according to the existing procedure.

4. Location services client for sending a deferred location request message via a gateway mobile location center to a mobile services switching center or a serving general packet radio service support node, **characterized in that** the location services client 1 is adapted to include a parameter specifying a maximum amount of time said location services client waits for receiving location information.

5. Mobile services switching centre **characterized by** comprising a receiver adapted to receive from a location services client via a gateway mobile location center a parameter sent in a deferred location request message through a mobile application part message specifying a maximum amount of time a location services client waits for receiving location information.

6. Serving general packet radio service support node **characterized by** comprising a receiver adapted to receive from a location services client via a gateway mobile location center a parameter sent in a deferred location request message through a mobile application part message specifying a maximum amount of time a location services client waits for receiving location information.

## Patentansprüche

1. Verfahren zur Einleitung einer zeitversetzten Aufenthaltsanfrage, umfassend den Schritt des Sendens einer zeitversetzten Aufenthaltsanfragenachricht von einem Aufenthaltsdienste-Client durch eine Gateway-Mobillokalisierungseinrichtung an eine Mobildienstevermittlungseinrichtung oder einen versorgenden Unterstützungsknoten für allgemeinen paketvermittelten Funkdienst, **dadurch gekennzeichnet, dass** die Anfragenachricht einen Parameter umfasst, der eine maximale Zeitdauer spezifiziert, die der Aufenthaltsdienste-Client auf die Aufenthaltsinformationen wartet.

2. Verfahren nach Anspruch 1, wobei der neue Parameter unter Modifizierung von bereits verwendeten Signalisierungsnachrichten gesendet wird.

3. Verfahren nach Anspruch 2, wobei eine Mobildienstevermittlungseinrichtung oder ein Unterstützungsknoten für allgemeinen paketvermittelten Funkdienst bei Empfang einer "PROVIDE-SUBSCRIBER-LOCATION-ACK"-Bestätigungsnachricht einen Zeitgeber gemäß dem Zeitwert in der Anfrage startet und eine Nachricht "SUBSCRIBER LOCATION REPORT" gemäß der bestehenden Prozedur an die Gateway-Mobillokalisierungseinrichtung gesendet wird.

4. Aufenthaltsdienste-Client zum Senden einer zeitversetzten Aufenthaltsanfragenachricht über eine Gateway-Mobillokalisierungseinrichtung an eine Mobildienstevermittlungseinrichtung oder einen versorgenden Unterstützungsknoten für allgemeinen paketvermittelten Funkdienst, **dadurch gekennzeichnet, dass** der Aufenthaltsdienste-Client so ausgelegt ist, dass er einen Parameter einfügt, der eine maximale Zeitdauer spezifiziert, die der Aufenthaltsdienste-Client auf den Empfang von Aufenthaltsinformationen wartet.

5. Mobildienstevermittlungseinrichtung, **gekennzeichnet durch** Umfassen eines Empfängers, der so ausgelegt ist, dass er von einem Aufenthaltsdienste-Client über eine Gateway-Mobillokalisierungseinrichtung einen Parameter empfängt, der in einer zeitversetzten Aufenthaltsanfragenachricht **durch** eine Mobilanwendungsteilnachricht gesendet wird und eine maximale Zeitdauer spezifiziert, die ein Aufenthaltsdienste-Client auf den Empfang von Aufenthaltsinformationen wartet.

6. Versorgender Unterstützungsknoten für allgemeinen paketvermittelten Funkdienst, **gekennzeichnet durch** Umfassen eines Empfängers, der so ausgelegt ist, dass er Von einem Aufenthaltsdienste-Client über eine Gateway-Mobillokalisierungseinrichtung einen Parameter empfängt, der in einer zeitversetzten Aufenthaltsanfragenachricht **durch** eine Mobilanwendungsteilnachricht gesendet wird und eine maximale Zeitdauer spezifiziert, die ein Aufenthaltsdienste-Client auf den Empfang von Aufenthaltsinformationen wartet.

## Revendications

1. Procédé pour lancer une demande de localisation différée, comprenant l'étape consistant à envoyer un message de demande de localisation différée depuis un client de services de localisation par l'intermédiaire d'un centre de localisation mobile passerelle vers un centre de commutation pour les services mobiles ou un noeud de prise en charge de service général de radiocommunication en mode paquet serveur, **caractérisé en ce que** le message de demande comprend un paramètre spécifiant une quantité de temps maximale pendant laquelle le client de services de localisation attend l'information de localisation.

2. Procédé selon la revendication 1, dans lequel le nouveau paramètre est envoyé en modifiant les messages de signalisation déjà utilisés.

3. Procédé selon la revendication 2, dans lequel un centre de commutation pour les services mobiles ou un noeud de prise en charge de service général de radiocommunication en mode paquet démarre à la réception d'un message d'accusé de réception « PROVIDE-SUBSCRIBER-LOCATION-ACK », une temporisation conformément à la valeur temporelle dans la demande, un message « SUBSCRIBER LOCATION REPORT » étant envoyé au centre de localisation mobile de passerelle conformément à la procédure existante.

4. Client de services de localisation pour envoyer un message de demande de localisation différée via un centre de localisation mobile de passerelle vers un centre de commutation pour les services mobiles ou un noeud de prise en charge de service général de radiocommunication en mode paquet serveur, **caractérisé en ce que** le client de services de localisation est adapté pour inclure un paramètre spécifiant une quantité de temps maximale pendant laquelle ledit client de services de localisation attend la réception d'une information de localisation.

5. Centre de commutation pour les services mobiles **caractérisé en ce que** il comprend un récepteur adapté pour recevoir depuis un client de services de localisation via un centre de localisation mobile passerelle un paramètre envoyé dans un message de demande de localisation différée par l'intermédiaire d'un message de sous-système application mobile spécifiant une quantité de temps maximale pendant laquelle un client de services de localisation attend la réception d'une information de localisation.

6. Noeud de prise en charge de service général de radiocommunication en mode paquet serveur **caractérisé en ce qu'**il comprend un récepteur adapté pour recevoir depuis un client de services de localisation via un centre de localisation mobile passerelle un paramètre envoyé dans un message de demande de localisation différée par l'intermédiaire d'un message de sous-système application mobile spécifiant une quantité de temps maximale pendant laquelle un client de services de localisation attend la réception d'une information de localisation.
